Europäisches Patentamt

(19) European Patent Office

Office européen des brevets

(11) Publication number: **0 263 669 B1**

# EUROPEAN PATENT SPECIFICATION

(45) Date of publication of patent specification: **30.10.91**    (51) Int. Cl.⁵: **B60T 17/00, B60T 17/18**

(21) Application number: **87308824.9**

(22) Date of filing: **06.10.87**

(54) **Compressed gas apparatus.**

(30) Priority: **07.10.86 GB 8623989**

(43) Date of publication of application:
**13.04.88 Bulletin 88/15**

(45) Publication of the grant of the patent:
**30.10.91 Bulletin 91/44**

(84) Designated Contracting States:
**BE DE ES FR IT NL**

(56) References cited:
**EP-A- 0 191 151**
**EP-A- 0 199 948**
**GB-A- 1 157 227**

(73) Proprietor: **BENDIX LIMITED**
**Douglas Road**
**Kingswood, Bristol BS15 2NL(GB)**

(72) Inventor: **Gibbons, Peter Frederick**
**107 Samuel White Road**
**Hanham Bristol BS15 3LR(GB)**
Inventor: **Bowker, Glenn Stephen**
**9, Williams Close**
**Longwell Green Bristol BS15 6BS(GB)**

(74) Representative: **Turner, Alan Reginald**
**BENDIX LIMITED Douglas Road**
**Kingswood, Bristol BS15 2NL(GB)**

## Description

This invention relates to compressed gas apparatus and relates especially to compressed air systems for use in braking systems of heavy road vehicles, according to the pre-characterizing part of Claim 1 and disclosed in GB-A-1 157 227.

In heavy road vehicles it is normal practice to install braking systems which operate in response to air pressures and in the interests of safety such systems are required to have independent braking circuits with independent storage reservoirs for respective circuits. Problems can arise with such systems if one circuit develops a fault because the compressor or other source of compressed air for charging the reservoirs then tends to dissipate compressed air through the faulty circuit, leaving the other circuit starved of an air supply.

One well known way of overcoming the above problem is to provide a multi-circuit protection valve assembly comprising a plurality of valve devices the construction of each of which is such that it closes in the event of the pressure of a reservoir being charged descending below a given pressure setting. In this way unaffected reservoirs or circuits continue to be charged at least to the said pressure value. However, it is to be realised that with such multi-circuit protection valves the pressure to which circuits not subject to the fault can be charged is limited to the given pressure setting. Furthermore, as a result of this the capacity of the reservoirs may require to be large enough to store a necessary quantity of air at the set pressure.

The present invention seeks to provide alternative means whereby a plurality of independent reservoirs are chargeable from the same source and which ensures charging of an unfailed reservoir to a full pressure value, even in the event of a failed reservoir of another circuit.

According to the present invention there is provided compressed gas apparatus including a source of gas under pressure, at least two gas pressure reservoirs respective normally open cut-off valves providing charging connections from said source to said reservoirs respective pressure sensing means for sensing the pressures in said reservoirs and control means responsive to said sensing means for interrupting such charging via said respective cut-off valves when a pre-determined pressure value is attained in said reservoirs said cut off valves being electrically operable valves and said means including means responsive to an abnormal pressure condition in one or other said reservoir for effecting selective closure of cut-off valve thereto.

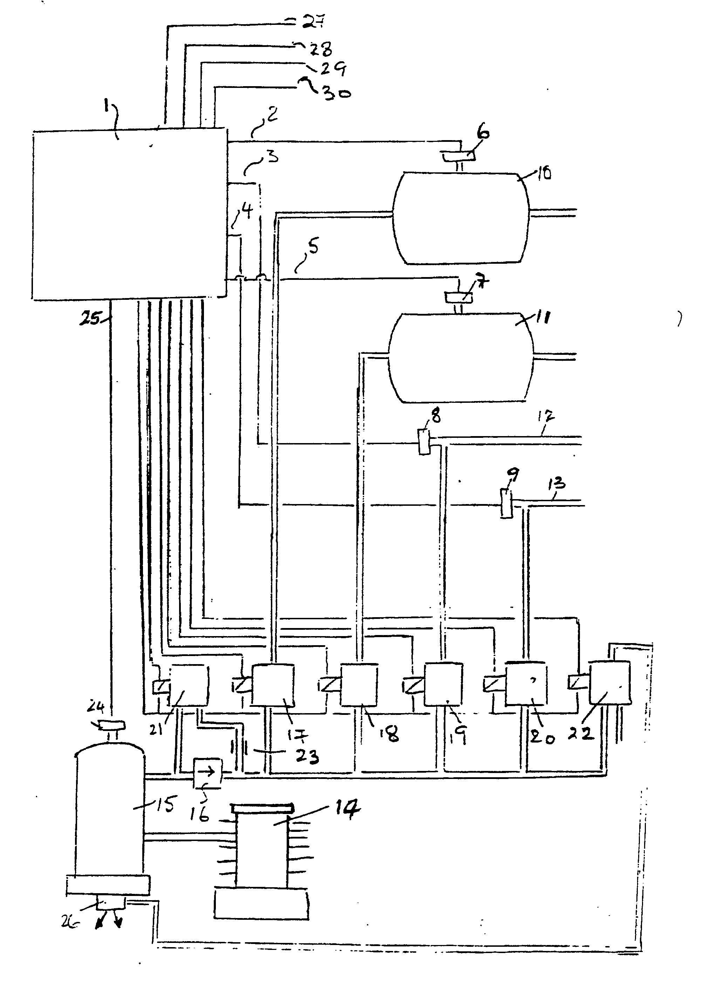

In order that the invention may be more clearly understood and readily carried into effect the same will be further described by way of example with reference to the accompanying drawing which illustrates in schematic form a multiple reservoir fluid pressure circuit charging apparatus.

Referring to the drawing the single-lines between the various components illustrated therein represent electrical signal connections whereas the double-line connections represent fluid pressure connections. An electronic control unit which will be further discussed below is represented by a rectangle 1. This control unit has a plurality of electrical signal inputs on input lines, 2, 3, 4 and 5, from respective pressure transducers 6, 7, 8 and 9 sensing pressures in respective fluid pressure reservoirs 10, 11 or fluid pressure circuits 12 and 13.

The reservoirs 10, 11 and pressure circuits 12 and 13 are compressed air reservoirs or circuits of a compressed air braking system of a vehicle having brakes operable by compressed air applied to brake actuators for applying braking forces to wheels thereof. The reservoirs 10 and 11 and circuits 12 and 13 are chargeable by an air compressor 14 driven by the engine of a vehicle and it provides a supply of compressed air via an air dryer 15 and a check valve 16 to input ports of respective normally open electromagnetically operable cut-off valves 17, 18,19 and 20. These four valves are of a type which are open when not electrically energised. Two further such valves 21 and 22 are provided and these are of a type which is closed when not electricaly energised.

Valve 21 in combination with a flow restriction choke 23 when energised provides a bypass path across the check valve 16, whereby a metered back-flow of dry air from reservoirs 10 and/or 11 can be provided to effect purging of desiccant in the air dryer 15 to regenerate the desiccant. Such purging is normally arranged to take place during periods when charging of the reservoirs is interrupted. The pressure in the air dryer 15 is sensed by a further transducer 24 the electrical signal output from which on line 25 is presented as a further control input to the controller 1. Valve 22 therefore operates in the manner of a governor device signalled electrically by being energised by controller 1, to apply a signal pressure to a pneumatically operable unloading and purge valve 26 for the air dryer 15, whereby the compressor runs off-load following attainment of full-charged system pressure and purge air and moisture from the desiccant also pass out through valve 26.

The apparatus described is intended for supplying compressed air to operationally independent brake circuits of a vehicle having a compressed air braking system. The reservoirs 10 and 11 comprise separate service brake pressure sources for circuits operated by a driver by actuating of a dual circuit foot-valve or other device (not shown), providing control inputs at 27 and 28 to unit 1. Lines 12 and 13 are spring brake and auxiliary circuits respectively, and control inputs 29 and 30 to unit 1 are provided therefrom to indicate that there is an air demand. Obviously further reservoirs and respective electrically operable charging valves may be provided if needed in a more sophisticated system.

In operation of the apparatus shown, as soon as the vehicle engine is started, assuming the stored pressures are zero the engine-driven compressor commences to supply air under pressure via the air dryer 15, check valve 16 and respective electrically operable valves 17 and 18 in their open condition to storage reservoirs 10 and 11. At this time the controller 1 will be receiving pressure signals from all the mentioned transducers and causes electrical signals to be fed to the solenoids of valves 19 and 20 until predetermined stored pressures (say 5 bar) are attained in reservoirs 10 and 11. This will hold valves 19 and 20 closed to prevent inter alia the possibility of release pressure being applied via circuit 12 to spring brakes by which the vehicle is safely parked and also ensure preferential charging of reservoirs 10 and 11, to enable the service brakes as rapidly as possible.

Upon attainment of the mentioned predetermined pressures in reservoirs 10 and 11, as sensed by transducers 6 and 7, the controller 1 cuts off in turn the energising signals to valves 19 and 20 whereupon all four valves 17, 18, 19 and 20 are now in their normally open condition, apart from being de-energised in turn for proving or diagnostic reasons, enabling them to be checked for operation as described later. Upon subsequent attainment of fully charged pressures (typically 9 bar), as sensed by all four transducers 6, 7, 8 and 9, the controller 1 applies energising signals to operating solenoids of valves 21 and 22. Valve 22 thereby applies signal pressure to the unloader valve 26 so that the compressor 14 now runs "off-load" and charging is interrupted.

Valve 21 now also permits a measured flow of dry air under pressure to be metered back from reservoirs 10 and 11 via the normally open valves 17 and 18 and metering choke 23 through the desiccant in the air dryer 15 to purge same of moisture. This metered discharge is then interrupted by controller 1 by removing the energisation of valve 21 but leaving the valve 22 energised to hold the compressor "off-load" until a significant pressure depletion as sensed by one of the transducers 6, 7, 8 or 9 calls for the compressor to be brought back on load.

Although not specifically shown in the drawing, the control unit is provided with built-in diagnostic functions which are designed to provide the necessary warning signals to a vehicle driver in the event of a potential malfunction being detected. The solonoids of the valves 17 to 22 are checked frequently during normal operation. Each has two return circuit loops both of which are checked by applying pilot signals thereto. Similarly, the pressure transducers are frequently checked for the presence of open or short circuit conditions.

Under charging conditions commencement of a charge mode is stored in time and the control unit has a built-in test mode which will provide a warning signal in the event of a pre-determined system pressure not being attained within a given time interval. Such a warning is then indicative of compressor efficiency loss, or leakage before or after the valves 17 and 18.

If during a charging or initial charging mode the pressure transducer 24 senses no pressure rise in the air dryer 15, this must be indicative of faults such as engine/compressor failure, pipe fracture or a spuriously open unloader valve 26. A driver warning may thus be given by unit 1.

The pressure transducers 6 and 7 and the pressure transducer 24 enable the control unit 1 to sense the existence of pressure in 15 which abnormally exceeds that in the reservoirs. This is indicative of a leak between the air dryer 15 and the solonoid valves and again a warning is given by the control unit.

Failure of the transducer 24 to indicate to the control unit 1 a pressure drop in the air dryer 15, within one second after a purge command to valve 22, indicates either a leak in the unloader control pipe from 22 or a failure of the valve 22 itself and again a warning is given by unit 1. Any overcharge will be prevented by a suitable safety valve (not shown).

Considering now the question of a normal running leak in a service circuits supplied by reservoirs 10 and 11, such a leak results in both these reservoirs falling in pressure as sensed by transducers 6 and 7. Such is distinguished from brake pressure demand by virtue of the presence of inputs at 27 and 28 to 1, derived from the driver's foot control unit or brake pedal (now shown). In the event of more than a pre-determined pressure drop being sensed with no demand, the unit 1 will energise all the valves 17 to 20 and the pressures as sensed by transducers 6, 7, 8 and 9 are then monitored by unit 1 to detect which is connected to a leak. The remaining valves are immediately reopened and a warning is given to indicate the presence of such a leak. Depending upon whether a leak is associated (say) with spring brake hold-off pressure connections the brakes may drag on and this is a possibility of which the driver will be made aware.

System test cycles are effected by the control unit 1 during periods when the compressor 15 is "off-load" and after a purge sequence has been completed. In such periods, energising currents are applied to the valves 17, 18 19 and 20, proper pull-in of their respective armatures being sensed and warnings being generated in the event of such not being sensed. Means is also provided of course to inhibit such tests in the event of an air demand being sensed or in the event of the operating mode being changed back to the charge mode.

Considering now possible malfunction relating to the transducers, these are detectable by sequential sensing procedures built into the control unit 1. Open circuit and short circuit conditions of the transducers are readily detectable whereas partial failures manifesting themselves as (say) gain variations are sensed when the valve 17, 18, 19 and 20 are all de-energised and the transducers 6, 7, 8 and 9 should all be presenting compatible outputs. Malfunction of transducer 24 by sensing correct pressure descent during a purge mode. In the event of malfunction, driver warning is again given.

Many variants of the reservoir charging apparatus as described in the foregoing will be apparent to those skilled in the art of advanced vehicle braking systems.

In one variation the valve 22, for example, may be dispensed with in favour of an electric relay for supplying an electric operating signal to an electrically operable purge valve instead of pneumatically operable valve 26. Whilst moreover the single lines of the drawing represent electric conductors or groups of such conductors for electric signals some may be replaced by fibre optic links. This may be particularly applicable to signal inputs to the control unit 1.

In another variant the electronic control unit may be provided with means for applying signals to the valve 22 at predetermined time intervals during operation of the vehicle in order to ensure sufficient purging of the desiccant of air dryer 15. This will prevent the performance of the air dryer being impaired when stored reservoir pressures only rarely attain the pressure at which the compressor goes "off-load".

In another variant, the electronics control unit may be provided with means for relating the frequency and or volume of purging air to the air dryer to the quantity of air supplied by the compressor.

## Claims

1. Compressed gas apparatus including a source (14) of gas under pressure, at least two gas pressure reservoirs (10,11) respective normally open cut-off valves (17,18) providing charging connections from said source to said reservoirs characterised by respective pressure sensing means (6,7) for sensing the pressures in said reservoirs and control means (1) responsive to said sensing means for interrupting such charging via said respective cut-off valves (17, 18) when a predetermined pressure value is attained in said reservoirs (10,11) said cut-off valves being electrically operable valves and said control means (1) including means responsive to an abnormal pressure condition in one or other said reservoir for effecting selective closure of the cut-off valve respective thereto.

2. Compressed gas apparatus as claimed in claim 1 characterised by said means (1) responsive to an abnormal pressure condition being operable to sense pressure drop and in response thereto temporarily to close both said cut-off valves (17,18) and to sense which reservoir continues to be subject of pressure drop and to reopen the cut-off valve associated with the other reservoir.

3. Compressed gas apparatus as claimed in claim 1 or 2 characterised by said source (14) being a compressor and the means responsive to the sensing means (6,7) for interrupting charging comprising a further electrically operable valve (22) operable to apply a fluid pressure signal to an unloader valve (26) for the compressor (14).

4. Compressed gas apparatus as claimed in claim 1, 2 or 3, characterised by a further electrically operable valve (21) in a restricted feed-back path (23) for compressed gas from said reservoirs through desiccant of a dryer (15).

5. Compressed gas apparatus as claimed in claim 4, characterised by said restricted feed-back (23) path being a path in parallel with a one-way charging valve (16) in the path of gas flow from the dryer (15) to said reservoirs.

6. Compressed gas apparatus as claimed in any preeceding claim characterised by at least one further electrically operable cut-off valve (19,20) connected in flow paths between said source and a respective further compressed gas line (12, 13), said control means being operable to maintain said at least one further cut-off valve closed until the pressure in at least one said reservoir attains a predetermined value.

7. Compressed gas apparatus as claimed in claim 6 characterised by further pressure sensing means (8, 9) operable to sense the pressure in the or each said further compressed gas line and said control means being operable in response to signals derived from said further sensing means to close said further cut-off valve (19,20) at a predetermined higher pressure.

8. Compressed gas apparatus as claimed in any preceeding claim,characterised by said control means being operable to effect test cycles during predetermined conditions said test cycles comprising briefly applying test currents to said cut-off valves and sensing correct operation thereof or incorrect operation thereof.

9. Compressed gas apparatus as claimed in any preceeding claim characterised by said control means including means responsive to output signal changes and means responsive thereto.

10. Compressed gas apparatus as claimed in any preceeding claim, said control means (1) including means for detecting incompatible outputs from transducers (6, 7, 8 and 9) when respective cut-off valves (17, 18, 19,20) are open to indicate transducer malfunction.

**Revendications**

1. Appareil à gaz comprimé comprenant une source (14) de gaz sous pression, au moins deux réservoirs de gaz sous pression (10, 11), des valves (17, 18) de coupure normalement ouvertes respectives établissant des liaisons de chargement entre cette source et lesdits réservoirs, caractérisé par des moyens de détection de pression respectifs (6, 7) pour détecter les pressions dans lesdits réservoirs et des moyens de commande (1) sensibles auxdits moyens de détection pour interrompre de tels chargements par intermédiaire des valves de coupure respectives (17, 18) quand une valeur de pression prédéterminée est atteinte dans lesdits réservoirs (10, 11), lesdites valves de coupure étant commandées électriquement et lesdits moyens (1) comprenant des moyens sensibles à un niveau de pression anormal dans l'un ou l'autre des réservoirs pour assurer la fermeture sélective de la valve de coupure associée.

2. Appareil à gaz comprimé conforme à la revendication 1, caractérisé en ce que lesdits moyens sensibles à un niveau de pression anormal sont utilisables pour détecter une chute de pression et pour couper temporairement en réponse, à la fois l'une et l'autre desdites valves de coupure (17, 18) et pour détecter lequel des réservoirs continue à être l'objet d'une chute de pression et pour réouvrir la valve de coupure associée à l'autre réservoir.

3. Appareil à gaz comprimé conforme à la revendication 1 ou 2, caractérisé en ce que ladite source (14) est un compresseur et en ce que les moyens sensibles aux moyens de détection (6, 7) pour interrompre le chargement comprennent une valve à commande électrique additionnelle (22) actionnable pour appliquer un signal de pression de fluide à une soupape de déchargement (26) pour le compresseur (14).

4. Appareil à gaz comprimé conforme à l'une des quelconques des revendications 1, 2 ou 3, caractérisé en ce qu'il comprend une valve (21) à commande électrique additionnelle, disposée dans une ligne (23) de réaction à restriction pour le gaz comprimé issu desdits réservoirs, à travers le produit déshydratant d'un sécheur (15).

5. Appareil à gaz comprimé conforme à la revendication 4, caractérisé en ce que ladite ligne (23) de réaction à restriction est disposée en parallèle avec une valve de chargement unidirectionnelle (16), dans la ligne d'écoulement du gaz, du sécheur (15) vers lesdits réservoirs.

6. Appareil à gaz comprimé conforme à l'une quelconque des revendications précédentes, caractérisé en ce qu'il comprend au moins une valve de coupure (19, 20) à ouverture électrique additionnelle connectée dans des lignes d'écoulement situées entre ladite source et une ligne de gaz comprimé (12, 13) additionnelle, lesdits moyens de commande étant actionnables pour maintenir fermée ladite valve de coupure additionnelle jusqu'à ce que la pression dans au moins un des réservoirs atteigne une valeur prédéterminée.

7. Appareil à gaz comprimé conforme à la revendication 6, caractérisé en ce qu'il comprend des moyens de détection de pression additionnels (8, 9) actionnable pour détecter la pression dans la ou dans chaque ligne de gaz comprimé additionnelle, lesdits moyens de commande étant actionnables en réponse à des signaux dérivés desdits moyens de détection additionnelle pour fermer ladite valve de coupure additionnelle (19, 20) à une haute pression prédéterminée.

8. Appareil à gaz comprimé conforme à l'une quelconque des revendications précédentes, caractérisé en ce que ledit moyen de commande est actionnable pour réaliser des cycles d'essai dans des conditions prédéterminées, lesdits cycles comprenant l'application brève de courants d'essai auxdites valves de coupure et la détection du fonctionnement correct ou incorrect desdites valves.

9. Appareil à gaz comprimé conforme à l'une des quelconques des revendications précédentes, caractérisé en ce que lesdits moyens de commande comprennent des moyens sensibles à des variations de signal de sortie et des moyens sensibles à ces moyens.

10. Appareil à gaz comprimé conforme à l'une quelconque des revendications précédentes, dans laquelle lesdits moyens de commande (1) comprennant des moyens pour détecter des sorties incompatibles desdits transducteurs (6, 7, 8 et 9) quand des valves de coupure associées (17, 18, 19, 20) sont ouvertes pour indiquer un mauvais fonctionnement du transducteur.

**Patentansprüche**

1. Druckgasvorrichtung umfassend eine Druckgasquelle (14) und wenigstens zwei Gasdruckbehälter (10,11) sowie betreffende gewöhnlich offene Absperrventile (17,18), die Aufladeverbindungen von der Quelle zu den Behältern schaffen, gekennzeichnet durch betreffende Druckfeststelleinrichtungen (6,7) zum Feststellen der Drücke in den Behältern, und eine Steuereinrichtung (1), die auf die Feststelleinrichtungen anspricht, um das Aufladen über die betreffenden Absperrventile (17,18) zu unterbrechen, wenn in den Behältern (10,11) ein vorbestimmter Druckwert erreicht ist, wobei die Absperrventile elektrisch betätigbare Ventile sind und die Einrichtung (1) Mittel umfaßt, die auf einen nicht normalen Druckzustand in dem einen oder dem anderen Behälter ansprechen, um ein ausgewähltes schließen des betreffenden Absperrventils zu bewirken.

2. Druckgasvorrichtung nach Anspruch 1, dadurch gekennzeichnet, daß die Mittel (1), die auf einen nicht normalen Druckzustand ansprechen, betätigbar sind, um einen Druckabfall festzustellen und beim Ansprechen darauf beide Absperrventile (17,18) zeitweilig zu schließen, und um festzustellen, welcher Behälter weiterhin einem Druckabfall unterworfen ist, um das dem anderen Behälter zugeordnete Absperrventil wiederum zu öffnen.

3. Druckgasvorrichtung nach Anspruch 1 oder 2, dadurch gekennzeichnet, daß die Quelle (14) ein Kompressor ist und daß die Einrichtung, die auf die Feststelleinrichtungen (6,7) anspricht zum Unterbrechen des Aufladens, ein weiteres elektrisch betätigbares Ventil (22) aufweist, welches betätigbar ist, um ein Druckmittelsignal an ein Entlastungsventil (26) für den Kompressor (14) anzulegen.

4. Druckgasvorrichtung nach Anspruch 1, 2 oder 3, gekennzeichnet durch ein weiteres elektrisch betätigbares Ventil (21) in einem verengten Rückkopplungsweg (23) für Drückgas von den Behältern über das Trocknungsmittel eines Trockners (15).

5. Druckgasvorrichtung nach Anspruch 4, dadurch gekennzeichnet, daß der verengte Rückkopplungsweg (23) ein Weg ist parallel zu einem Einweg-Aufladeventil (16) in dem Weg des Gasstromes von dem Trockner (15) zu den Behältern.

6. Druckgasvorrichtung nach irgendeinem der vorhergehenden Ansprüche, gekennzeichnet durch wenigstens ein weiteres elektrisch geöffnetes Absperrventil (19,20), welches in die Strömungswege zwischen der Quelle und einer betreffenden weiteren Druckgasleitung (12,13) geschaltet ist, und die Steuereinrichtung betätigbar ist, um das wenigstens eine weitere Absperrventil geschlossen zu halten, bis der Druck in wenigstens einem der Behälter einen vorbestimmten Wert erreicht.

7. Druckgasvorrichtung nach Anspruch 6, gekennzeichnet durch eine weitere Druckfeststelleinrichtung (8,9), die betätigbar ist, um den Druck in der oder in jeder weiteren Druckgasleitung festzustellen, und die Steuereinrichtung betätigbar ist beim Ansprechen auf von der weiteren Feststelleinrichtung abgeleitete Signale, um das weitere Absperrventil (19,20) bei einem vorbestimmten höheren Druck zu schließen.

8. Druckgasvorrichtung nach irgendeinem der vorhergehenden Ansprüche, dadurch gekennzeichnet, daß die Steuereinrichtung betätigbar ist, um Prüfkreisläufe während vorbestimmter Zustände zu bewirken, wobei die Prüfkreisläufe kurzes Anlegen von Prüfströmen an die Absperrventile und das Feststellen des richtigen Arbeitens oder unrichtigen Arbeitens von ihnen umfaßt.

9. Druckgasvorrichtung nach irgendeinem der vorhergehenden Ansprüche, dadurch gekennzeichnet, daß die Steuereinrichtung Mittel, welche auf Ausgangssignaländerungen ansprechen, und darauf ansprechende Mittel umfaßt.

10. Druckgasvorrichtung nach irgendeinem der vorhergehenden Ansprüche, wobei die Steuereinrichtung (11) Mittel umfaßt zum Feststellen von inkompatiblen Ausgängen von Wandlern (6,7,8 und 9), wenn betreffende Absperrventile (17,18,19,20) offen sind, um ein Falscharbeiten der Wandler anzuzeigen.